(19) Europäisches Patentamt
European Patent Office
Office européen des brevets

(11) **EP 3 459 710 A1**

(12) **EUROPEAN PATENT APPLICATION**

(43) Date of publication:
**27.03.2019 Bulletin 2019/13**

(21) Application number: **18195820.8**

(22) Date of filing: **20.09.2018**

(51) Int Cl.:
**B29C 64/118** (2017.01)   **B29C 64/393** (2017.01)
**B29C 64/295** (2017.01)   **B29C 64/209** (2017.01)
**B33Y 30/00** (2015.01)   **B33Y 50/02** (2015.01)
**B33Y 10/00** (2015.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.09.2017   US 201715713383**

(71) Applicant: **Desktop Metal, Inc.**
**Burlington, MA 01803 (US)**

(72) Inventors:
• **Barbati, Alexander C.**
  **Cambridge, MA Massachusetts 02140 (US)**
• **Myerberg, Jonah Samuel**
  **Lexington, MA Massachusetts 02420 (US)**

(74) Representative: **D Young & Co LLP**
**120 Holborn**
**London EC1N 2DY (GB)**

(54) **METHOD AND APPARATUS FOR CONTROLLING HEAT FOR IMPROVED EXTRUDATE FLOW IN THREE-DIMENSIONAL (3D) PRINTING**

(57)   In a three-dimensional (3D) printing system (100) and method for printing a 3D object (104), a material in solid form (111) is elevated in temperature to a point at which the material melts or partially melts and begins to flow from a nozzle (126) as a result of an actuating force or displacement resulting in a force. Since the transfer of heat to the material is central to melting and flow of the material, and the printing process ultimately, it is useful that the material be elevated to the appropriate temperature. By anticipating large fluxes of material through the nozzle and adjusting a heating rate in advance of an increased deposition rate, the material remains melted, and extrusion of the material via the nozzle (126) is not limited by heating.

FIG. 1

**Description**

BACKGROUND

In additive manufacturing (AM), also known as three-dimensional (3D) printing, a 3D object may be created by forming successive layers of material under computer control. For example, an extrusion-based layered manufacturing machine may build up such a 3D object by extruding a build material (also referred to interchangeably herein as a feedstock, filament, or media) from an extruder in a predetermined pattern onto a build surface (also referred to interchangeably herein as a build plate, build platform, stage, base, or bed). The predetermined pattern may be determined based on a computer aided design (CAD) model representing the 3D object, or any other suitable data.

The feedstock may be supplied to the extruder and the extruder may bring the feedstock to a flowable temperature to produce a flowable feedstock for deposition onto the build plate. A force of the incoming feedstock may cause extrusion of the flowable feedstock out from the extruder, for example, out from a nozzle of the extruder. The flowable feedstock may be extruded via the nozzle and may adhere to a previously deposited layer of the feedstock with an adequate bond upon solidification.

A flow rate of the flowable feedstock being extruded from the nozzle may be a function of a plunge rate (also referred to interchangeably herein as a feed rate) of the feedstock, that is, a rate at which the feedstock is driven into a liquefying region of the extruder. A controller may control a speed of a mechanism for advancing the feedstock or pressure applied to the feedstock in order to control the plunge rate. In addition to controlling the plunge rate, the controller may control movement of the extruder in a horizontal x, y plane, as well as movement of the build plate in a vertical z-direction.

The controller may control the extruder movement relative to the 3D object being printed. For example, in some cases, the 3D object being printed may move in x and y directions, and the extruder may be stationary. By controlling such movements and the plunge rate in synchrony, the flowable feedstock may be deposited onto the build plate layer-by-layer along tool paths that may be derived from the CAD model. The flowable feedstock being extruded may fuse to previously deposited feedstock and solidify to form the 3D object resembling the CAD model.

SUMMARY

According to an aspect of the present invention there is provided a three-dimensional (3D) printing system comprising an extruder configured to extrude a given feedstock from an extrusion location and a controller configured to maintain a desired temperature for the given feedstock at the extrusion location by adjusting an amount of heat transfer to the given feedstock via the extruder. The adjusting may be based on a planned feedstock plunge rate for the given feedstock and the desired temperature. The controller may be configured to adjust the amount of the heat transfer at a time prior to enforcement of the planned feedstock plunge rate. The time may be based on a temporal response of heat transfer in the 3D printing system.

The 3D printing system may further comprise a proportional-integral-derivative (PID) controller and a temperature sensor. The temperature sensor may be coupled to the extruder and the PID controller and may be configured to sense an operating temperature of the extruder. The PID controller may be configured to adjust the amount of heat transfer further based on the operating temperature.

The temporal response may be dependent on dimensions of the extruder, a specific heat of the extruder, a conductivity of the extruder, a mass of the extruder, or a combination thereof.

The time may be further based on a present time, a present feedstock plunge rate at the present time, a future time at which the planned feedstock plunge rate is to be enforced, and a rate of change between the present feedstock plunge rate at the present time and the planned feedstock plunge rate at the future time.

The 3D printing system may further comprise a heating element coupled to the extruder. The controller may be configured to adjust an input power setting to the heating element to adjust the amount of heat transfer.

The input power setting may be a power value, percentage value, or duty cycle value.

The controller may be configured to control the input power setting based on the planned feedstock plunge rate and a relationship between input power to the heating element and feedstock plunge rate. The relationship may be specific to the desired temperature, an environmental condition of the extruder, properties of the extruder, and properties of the given feedstock.

The environmental condition may include an ambient temperature of a chamber that houses the extruder and a speed of a fan of the 3D printing system.

The properties of the extruder may include a first heat transfer coefficient representing heat loss per temperature difference of the extruder and a second heat transfer coefficient representing heat loss of the extruder that varies with a speed of a fan of the 3D printing system.

The properties of the given feedstock may include density of the given feedstock, specific heat of the given feedstock, a thermal conductivity of the given feedstock, a cross-sectional area of the given feedstock in solid form, or a combination thereof.

The 3D printing system may further comprise a heating element coupled to the extruder. Enforcement of the planned feedstock plunge rate may cause an increase or decrease to a present feedstock plunge rate of the given feedstock. The controller may be configured to adjust the amount of heat transfer by adjusting an input power setting to the heating element to maintain the desired temperature for the given feedstock despite the increase or decrease to the present feedstock plunge rate.

The extruder may include a liquefying region, and the planned feedstock plunge rate may represent a planned speed for driving the given feedstock into the liquefying region.

The desired temperature may be a lowest temperature at which the given feedstock begins to flow in response to an applied force or displacement.

The controller may be further configured to receive a plurality of toolpath commands for printing a 3D object. The planned feedstock plunge rate may be based on one or more of the plurality of toolpath commands received.

According to a further aspect of the present invention, there is provided a method for printing a three-dimensional (3D) object in a 3D printing system comprising extruding a given feedstock from an extrusion location of an extruder and maintaining a desired temperature for the given feedstock at the extrusion location by adjusting an amount of heat transfer to the given feedstock via the extruder based on a planned feedstock plunge rate for the given feedstock and the desired temperature. The amount may be adjusted at a time prior to enforcement of the planned feedstock plunge rate. The time may be based on a temporal response of heat transfer in the 3D printing system.

The method may further comprise sensing an operating temperature of the extruder and further adjusting the amount of heat transfer based on the operating temperature.

The temporal response may be dependent on dimensions of the extruder, a specific heat of the extruder, a conductivity of the extruder, a mass of the extruder, or a combination thereof.

The time may be further based on a present time, a present feedstock plunge rate at the present time, a future time at which the planned feedstock plunge rate is to be enforced, and a rate of change between the present feedstock plunge rate at the present time and the planned feedstock plunge rate at the future time.

Adjusting the amount of heat transfer may include adjusting an input power setting to a heating element coupled to the extruder.

The input power setting may be a power value, percentage value, or duty cycle value.

The method may further include controlling the input power setting based on the planned feedstock plunge rate and a relationship between input power to the heating element and feedstock plunge rate. The relationship may be specific to the desired temperature, an environmental condition of the extruder, properties of the extruder, and properties of the given feedstock.

The environmental condition may include an ambient temperature of a chamber that houses the extruder and a speed of a fan of the 3D printing system.

The properties of the extruder may include a first heat transfer coefficient representing heat loss per temperature difference of the extruder and a second heat transfer coefficient representing heat loss of the extruder that varies with a speed of a fan of the 3D printing system.

The properties of the given feedstock may include density of the given feedstock, specific heat of the given feedstock, a thermal conductivity of the given feedstock, a cross-sectional area of the given feedstock in solid form, or a combination thereof.

The method may further comprise enforcing the planned feedstock plunge rate causing an increase or decrease to a present feedstock plunge rate of the given feedstock. Adjusting the amount of heat transfer may include adjusting an input power setting to a heating element coupled to the extruder to maintain the desired temperature for the given feedstock despite the increase or decrease to the present feedstock plunge rate.

The extruder may include a liquefying region, and the planned feedstock plunge rate may represent a planned speed for driving the given feedstock into the liquefying region.

The desired temperature may be a lowest temperature at which the given feedstock begins to flow in response to an applied force or displacement.

The method may further comprise receiving a plurality of toolpath commands for printing the 3D object and determining the planned feedstock plunge rate based on one or more of the plurality of toolpath commands received.

According to yet another aspect of the present invention a non-transitory computer-readable medium for controlling a three-dimensional (3D) printing system may have encoded thereon a sequence of instructions which, when loaded and executed by a processor, causes the processor to control extrusion of a given feedstock from an extrusion location of an extruder and maintain a desired temperature for the given feedstock at the extrusion location by adjusting an amount of heat transfer to the given feedstock via the extruder based on a planned feedstock plunge rate for the given feedstock and the desired temperature. The amount may be adjusted at a time prior to enforcement of the planned feedstock plunge rate, the time based on a temporal response of heat transfer in the 3D printing system.

It should be understood that example embodiments disclosed herein can be implemented in the form of a method, apparatus, system, or computer readable medium with program codes embodied thereon.

BRIEF DESCRIPTION OF THE DRAWINGS

The foregoing will be apparent from the following more particular description of example embodiments, as illustrated in the accompanying drawings in which like reference characters refer to the same parts throughout the different views. The drawings are not necessarily to scale emphasis instead being placed upon illustrating embodiments.

FIG. 1 is a block diagram of an example embodiment of a three-dimensional (3D) printing system for printing a 3D object.
FIG. 2 is block diagram of an example embodiment of an extruder.
FIG. 3 is a graph of an example embodiment of a plot of a relationship between input power for heating a given feedstock and a feedstock plunge rate of the given feedstock.
FIG. 4 is a block diagram of an example embodiment of an active control loop for maintaining a desired temperature of a given feedstock at an extrusion location.
FIG. 5A is a graph of an example embodiment of a plot of feedstock plunge rate over time.
FIG. 5B is a graph of another example embodiment of a plot of feedstock plunge rate over time.
FIG. 6 is a flow diagram of an example embodiment of a method for commanding input power to a heater in a 3D printing system.
FIG. 7 is a flow diagram of an example embodiment of a method for printing a 3D object in a 3D printing system.
FIG. 8 is a block diagram of an example internal structure of a computer optionally within an embodiment disclosed herein.

DETAILED DESCRIPTION

A description of example embodiments follows.

Additive manufacturing, also referred to as 3D printing, includes a variety of techniques for manufacturing a 3D object via an automated process of forming successive layers of the 3D object. A mixture of a powdered metal material and a binder material (*e.g.,* a polymer such as polypropylene, or any other suitable binder material) forms a feedstock capable of being molded, at a high temperature, into a shape of the 3D object.

A 3D printing system may utilize a feedstock comparable to that used in metal injection molding (MIM). An initial molded part, also referred to as a "green part," may undergo a debinding process to remove a primary binder, followed by a sintering process. During sintering, the green part may be brought to a temperature near a melting point of the powdered metal material which evaporates any remaining binder material and forms the metal powder material into a solid mass, thereby producing a final version of the 3D object. The final version of the 3D object may include a metal, metal alloy, ceramic, or any other suitable material or suitable combination of materials.

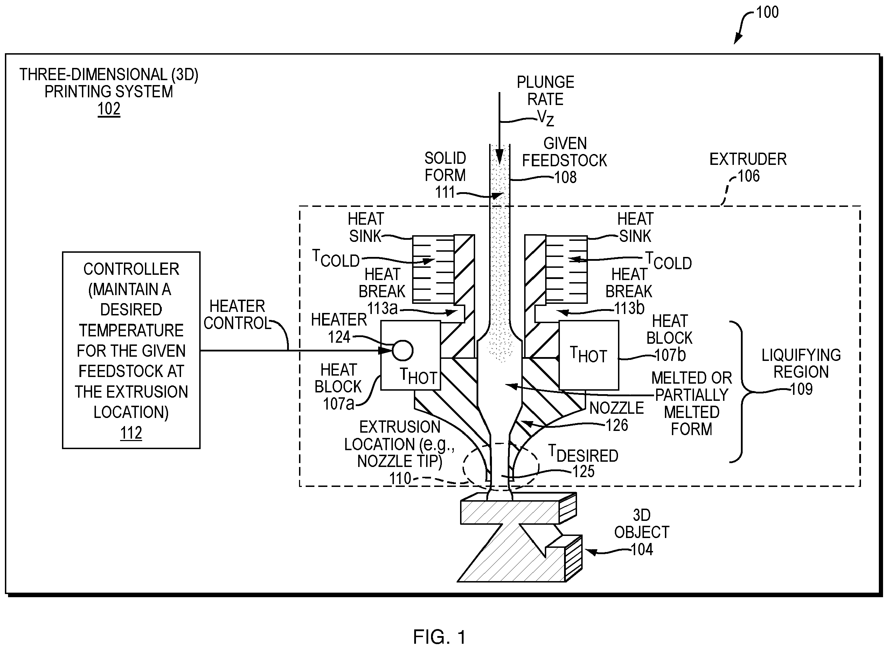

FIG. 1 is a block diagram 100 of an example embodiment of a three-dimensional (3D) printing system 102 for printing a 3D object 104. The 3D printing system 102 comprises an extruder 106 configured to extrude a given feedstock 108 from an extrusion location 110 and a controller 112 configured to maintain a desired temperature 125 for the given feedstock 108 at the extrusion location 110 by adjusting an amount of heat transfer to the given feedstock 108 via the extruder 106. The adjusting may be based on a planned feedstock plunge rate for the given feedstock 108 and the desired temperature 125. The controller 112 may be configured to adjust the amount of the heat transfer at a time prior to enforcement of the planned feedstock plunge rate. The time may be based on a temporal response of heat transfer in the 3D printing system 102.

The controller 112 may include a processor and memory, as well as any other coprocessors, signal processors, inputs and outputs, digital-to-analog or analog-to-digital converters and other processing circuitry useful for monitoring and controlling a fabrication process of the 3D printing system 102. The controller 112 may be configured to control a supply of the given feedstock 108 to the extruder 106, and any other instrumentation or control components associated with the fabrication process.

In general, a 3D computer aided design (CAD) model (not shown) of the 3D object 104 may be stored in a local or remote database (not shown) that may be accessible to the controller 112. The controller 112 may retrieve a particular 3D CAD model and generate machine-ready instructions for execution by the 3D printing system 102 to fabricate the 3D object 104. Generating the machine-ready instructions may include creation of intermediate models, such as by converting the particular 3D CAD model into a STereoLithography (STL) model or other polygonal mesh or other intermediate representation, which may, in turn, be processed to generate machine instructions for fabrication of the 3D object by the 3D printing system 102.

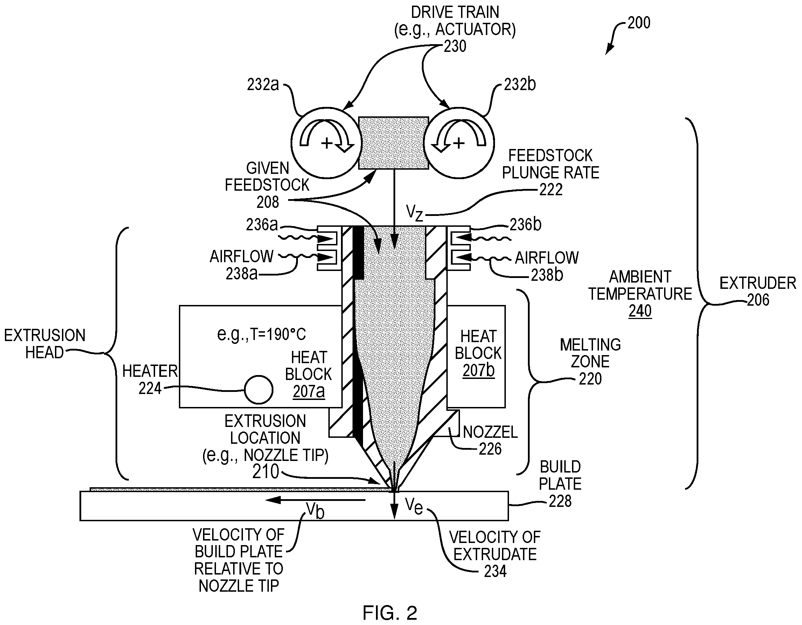

The controller 112 may be further configured to monitor a resulting heating of the given feedstock 108 in a variety of ways. For example, the controller 112 may monitor power delivered to heating element(s), such as the inductive or resistive circuits, disclosed further below with reference to FIG. 2. The controller 112 may monitor temperature of the given feedstock 108 or a surrounding environment at any number of locations. The extruder 106 may be driven along tool paths (not shown) in a horizontal x,y plane by an x-y translator (not shown) that may receive drive signals from the controller 112 in accordance with design data derived from a CAD model (not shown) representing the 3D object 104.

FIG. 2 is block diagram 200 of an example embodiment of an extruder 206, such as the extruder 106 of FIG. 1, disclosed above. The extruder 206 may be coupled to heat sinks, such as the cooling fins 236a and 236b that focus air flow 238a and 238b to ensure a solid form of a given feedstock 208 supplied to the extruder 206. However, it should be understood that maintaining the given feedstock 208 at a particular temperature to ensure a solid form may be performed in any suitable way such as via air temperature or water temperature of air or water, respectively, composing an environment for the extruder 206 or a portion thereof.

A chamber (not shown) may house the extruder 206. The chamber may be an environmentally sealed chamber that may be evacuated with a vacuum pump (not shown) or similar device in order to provide a vacuum environment for fabrication. The chamber may include a fan (not shown) for generating the air flow 238a and 238b and maintaining an ambient temperature 240 for the extruder 206.

The extruder 206 may receive the given feedstock 208 and heat the given feedstock 208 to a temperature desired for extrusion, such as the desired temperature 125 of FIG. 1, disclosed above. The desired temperature 125 may be a lowest temperature at which the given feedstock begins to flow in response to an applied force or displacement. The given feedstock 208 may be generally flowable or extrudable within typical operating temperatures of, for example, 160-250 degrees Celsius. This temperature range may depend on the binder. For example, some binders may achieve appropriate viscosities at about 205 degrees Celsius, while others may achieve appropriate viscosities at lower temperatures, such as about 160-180 degrees Celsius. It should be understood that such disclosed temperature ranges are provided by way of example and not of limitation.

It should be understood that the given feedstock 208 may not truly "melt" since it may be a mixture of metal and polymer in which the metal doesn't melt but the polymer does. The mixture may be any suitable mixture for printing a 3D object, such as ceramic in polymer, and the polymer may include multiple species each with its own melting point. An extrusion temperature of the given feedstock 208 may be such that not all polymers are in a molten state during extrusion. Heating of the given feedstock 208 may be within a melting zone 220, also referred to interchangeably herein as a liquefying region or hotend of the extruder 206.

The given feedstock 208 may advance at a feedstock plunge rate 222 into the hotend where it may be heated and, therefore, start to melt. The melting zone 220 may be a moveable region within which the given feedstock 208 deforms irreversibly due to temperature change. The melting zone 220 may be moveable due to changes in temperature or rate of actuation within the extruder 206 or due to any other suitable condition.

The extruder 206 may be configured to heat the given feedstock 208 within the melting zone via at least one heating element coupled to the extruder 206, such as the heater 224 that may be coupled to at least one heat block, such as the first heat block 207a and the second heat block 207b. A controller, such as the controller 112 of FIG. 1, disclosed above, may be configured to adjust an input power setting to the heater 224 to adjust an amount of heat transferred to the given feedstock 208. The input power setting may be a power value, percentage value with respect to power, or duty cycle value for controlling input power.

The given feedstock 208, in its molten form, may be deposited from a nozzle 226 of the extruder 206 in beads, or any other suitable form, onto a planar base, such as the build plate 228. The given feedstock 208 may be a flexible filament, or any other suitable form of build material, such as a continuous solid material (*e.g.,* a filament on a spool), liquid material, a semisolid slurry, a series of rods fed sequentially, a solid granular material, or any other suitable material. A spool (not shown) may carry a coil of filament that may be mounted on a spindle (not shown) for supplying to the extruder 206.

A drive train 230 may advance the given feedstock 208 in the extruder 206. The drive train 230 may include at least one actuator, such as a first actuator 232a and a second actuator 232b, that may be configured to advance the given feedstock 208 in the extruder 206. The first actuator 232a may be configured to perform coarse control of advancement for the given feedstock 208 whereas the second actuator 232b may be configured to perform fine and fast control relative to control performed by the first actuator 232a.

It should be understood that the drive train 230 may be any suitable mechanism for advancing the given feedstock 208 in the extruder 206. For example, the drive train 230 may comprise a pair of feed rollers (not shown) driven by a motor (not shown) that advances the given feedstock 208 into the extruder 206 at a controlled rate, such as the feedstock plunge rate 222. Alternatively, the drive train 230 may comprise a controlling mechanism such as a finger (not shown) for pushing the given feedstock 208 along an axis of the given feedstock 208 and down into the extruder 206. The drive train 230 may comprise a valve (not shown) that controls release of a pressure from a pressure source (not shown) that forces the given feedstock 208 into the extruder 206.

The extruder 206 may be pressurized by "pumping" the given feedstock 208 into the extruder 206. The given feedstock 208 may act as a piston. The pressurization may impel a molten form of the given feedstock 208 out of the nozzle 226. A velocity of the extrudate 234, that is, an output flow of the given feedstock 208, may be controlled by adjusting the drive train 230, for example, by adjusting a speed of rotation of the feed rollers, or by adjusting the drive train 230 in any suitable way to effect the feedstock plunge rate 222 and, thus a flow rate out of the nozzle 226. A controller, such as the controller 112 of FIG. 1, disclosed above, may adjust the drive train 230 to control the feedstock plunge rate 222 of the given feedstock 208.

The extruder 206 may be configured to heat the given feedstock 208 to a working temperature in a range suitable for extrusion in any suitable way. Any number of heating techniques may be used. In one aspect, electrical techniques such as inductive or resistive heating may be usefully applied to liquefy the given feedstock 208. The given feedstock 208 may be extruded in a multi-phase state, and/or extruded in a form of a paste or the like having highly viscous and/or non-Newtonian fluid properties. As such, the extruder 206 heats the given feedstock 208 to a flowable condition.

In order to facilitate resistive heating of the given feedstock 208, the heater 224 may be composed of one or more contact pads, probes or the like may be positioned within a feed path, that is, a traversal path of the given feedstock 208 within the extruder 206, in order to provide locations for forming a circuit through the given feedstock 208 at appropriate location(s). In order to facilitate induction heating, the heater 224 may be composed of one or more electromagnets that may be positioned at suitable locations adjacent to the feed path of the given feedstock 208 and operated by a controller, such as the controller 112 of FIG. 1, disclosed above, to heat the given feedstock 208 internally through creation of eddy currents. In one aspect, both of resistive and inductive heating may be used by the heater 224, concurrently, to achieve a more tightly controlled or more evenly distributed electrical heating within the given feedstock 208.

The extruder 206 may be translated in the x-y plane. Molten feedstock may be dispensed, controllably, layer-by-layer, onto the build plate 228 from an extrusion location 210, such as a nozzle tip of the nozzle 226, or any other suitable extrusion location. After each layer is dispensed, the build plate 228 may be lowered a predetermined increment along a vertical z-axis by a z-axis translator (not shown), which may also receive drive signals from a controller, such as the controller 112 of FIG. 1, disclosed above. The dispensed feedstock may fuse and solidify to form a 3D object resembling a CAD model, as disclosed above. Build material used to build a support structure may be dispensed in a like fashion in coordination with the dispensing of the given feedstock 208, to support portions of the 3D object as it is under construction.

As disclosed above with regard to FIG. 1 and FIG. 2, in a 3D printing system, a given feedstock in solid form may be elevated in temperature to a point at which the given feedstock melts or partially melts and begins to flow as a result of an actuating force or displacement resulting in a force. Since a transfer of heat to the given feedstock may be central to melting and flow of the given feedstock and the print process, ultimately, it is useful for the given feedstock be elevated to the appropriate temperature. An example embodiment disclosed herein anticipates fluxes of the feedstock plunge rate 222 of the given feedstock 208 being extruded from an extrusion location 210, such as a nozzle of the extruder 206, and adjusts a heating rate in advance of an increase or decrease to a deposition rate, ensuring that the given feedstock 208 remains melted or partially melted and extrusion is not limited by heating.

It may be desired to maintain the given feedstock 208 at a lowest temperature at which the given feedstock 208 begins to flow. As such, thermal degradation of the given feedstock 208 may be prevented. Thus, once printed, newly deposited (*i.e.,* printed) layers of the given feedstock 208 may be prevented from deforming structures already printed. Such deformation may result through a conveyance of heat with the newly deposited layers.

A challenge with maintaining the given feedstock 208 at the lowest temperature that enables flowability is that perturbations in a speed of printing can result in an undesirable halting of flow of the given feedstock 208 during the print process. In such an instance, a speed at which the given feedstock 208 is driven into the liquefying region, that is, the feedstock plunge rate 222, may be increased. Such an increase of speed may require more heat to be delivered to the given feedstock 208 to raise a temperature of the given feedstock 208 to an appropriate temperature when it leaves the nozzle 226. If an amount of heat transferred to the given feedstock 208 is less than required, an unmelted (or partially unmelted) amount of material in the given feedstock 208 may halt, occlude, or slow a flow of extrudate through the nozzle 226, damaging a 3D object being printed, such as the 3D object 104 of FIG. 1, disclosed above.

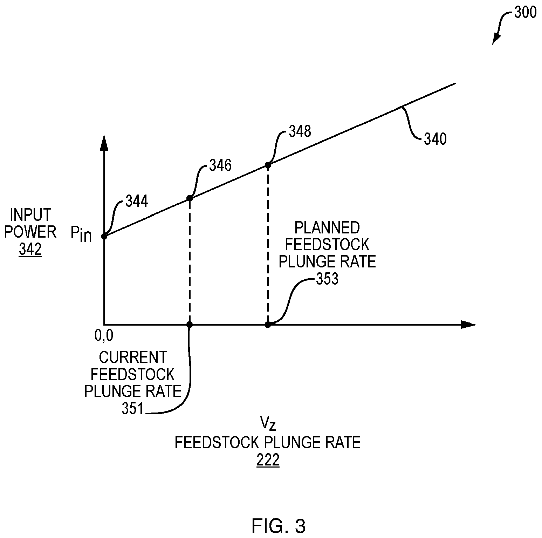

FIG. 3 is a graph 300 of an example embodiment of a plot 340 of a relationship between input power 342 for heating a given feedstock and a feedstock plunge rate 322 of the given feedstock. According to an example embodiment, the input power 342 may be computed based on the following:

$$P = \rho C_p A (T_E - T_\infty) v_Z + (\alpha + \beta f_s)(T_E - T_\infty). \qquad (1)$$

In Eq. (1), above, $P$ is the input power 342, $\rho$ is material density of the given feedstock, $C_p$ is a material specific heat of the given feedstock, $A$ is a cross-sectional area of the given feedstock, $T_E$ is a temperature of the extruder, $T_\infty$ is an ambient temperature of a chamber that houses the extruder, $v_z$ is a feedstock plunge rate for the given feedback, $\alpha$ is

a heat transfer coefficient describing heat loss per temperature difference on the extruder, $\beta$ is a coefficient describing the heat loss that varies with a fan speed of a fan of the 3D printing system, and $f_s$ is the fan speed.

The fan may be any suitable fan employed by the 3D printing system. For example, the fan may be located in the chamber and configured to circulate air that is heated. The fan may be a set of fans coupled to the extruder and configured to cool the extruder. The fan may be coupled to the extruder and configured in a manner which impinges upon the nozzle tip and the 3D object being printed.

The plot 340 shows input power 342 needed to maintain a desired temperature of a given feedstock at an extrusion location of an extruder based on the feedstock plunge rate 322. The input power 342 may be an absolute power value, a percentage value, or a duty cycle value. The plot 340 characterizes the input power 342 to the heater as a function of the feedstock plunge rate 322, that is, a feed rate for the feedstock. It should be understood that the plot 340 is specific to the desired temperature. An initial power input value 344 for a feedstock plunge rate 322 of zero is a function of an environment of the extruder, such as the ambient temperature 240 of the extruder 206 of FIG. 2, disclosed above. A higher initial input power value 344 may be needed for colder environmental conditions.

An example embodiment may anticipate a temperature change of a given feedstock at an extrusion location as a function of a change in feedstock plunge rate. For example, a current feedstock plunge rate 351 may require a current input power value 346 based on Eq. (1), disclosed above, in order to maintain the given feedstock at the desired temperature. However, a planned feedstock plunge rate 353 may require a future input power value 348 based on Eq. (1), disclosed above, in order to maintain the given feedstock at the desired temperature. Instead of sensing the temperature change and adjusting the input power 342 to compensate, an example embodiment changes the input power 342 in advance of the planned feedstock plunge rate 353 being enforced (*i.e.,* applied).

As disclosed above, a 3D object, such as the 3D object 104 of FIG. 1, disclosed above, may be printed based on print commands, also referred to interchangeably herein as toolpath commands, that may be derived from a CAD model representing the 3D object. The CAD model may be composed of multiple slices each representing a layer, also referred to interchangeably herein as a slice of the 3D object. An example embodiment may employ (i) a deterministic series of print commands known from a slice of the CAD model and (ii) a deterministic heater load and feedstock plunge rate relation for an extruder (also referred to interchangeably herein as a liquefying extruder). The relation may be computed via Eq. (1), disclosed above, that may be used to generate the plot 340 of FIG. 3, disclosed above. The relation may be any suitable relation that may be employed to determine an input power value to a heater to maintain a desired temperature for a given feedstock at an extrusion location.

Both (i) and (ii) may be determined on an object-by-object basis for each combination of feedstock type and extruder type. Utilizing a dependence of heater load on feedstock plunge rate from (ii), and a known command to the extruder for the feedstock plunge rate from (i), an increase in an amount of heater current may be applied before a change to the feedstock plunge rate in order to compensate for heat loss at the extrusion location, such as at the nozzle tip, occurring at an instant when the feedstock plunge rate is increased. An amount of time before which a change in a heater command is sent may be determined by a rate at which the temperature may be increased, which may be determined from measurements of a rate of heating of a heater under constant current load to the heater. Similarly, the heater command may be decreased (by lessening a time averaged heater current or duty cycle) when the feedstock plunge rate of the given feedstock is lessened.

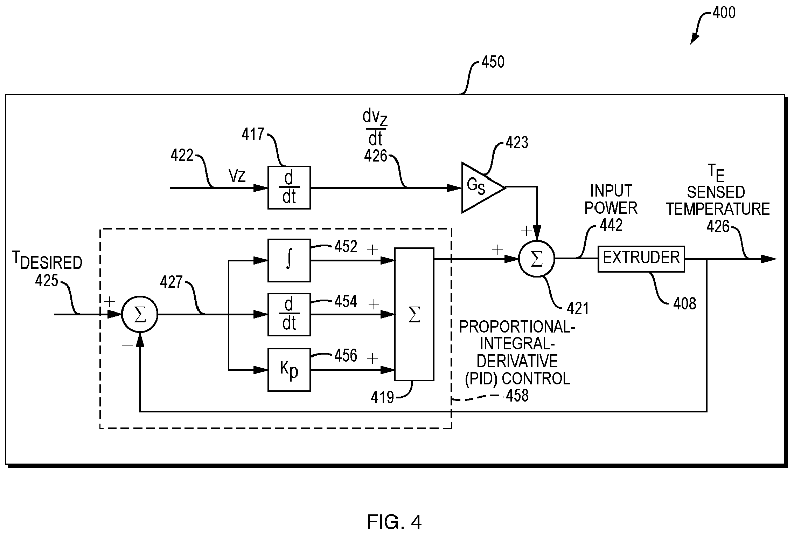

FIG. 4 is a block diagram 400 of an example embodiment of an active control loop 450 for maintaining a desired temperature of a given feedstock at an extrusion location. The active control loop 450 may be employed by a controller, such as the controller 112 of FIG. 1, disclosed above. The active control loop 450 receives a planned motion 422, such as a future plunge rate for the given feedstock that may be obtained from a series of print commands, such as the series of print commands disclosed above.

The active control loop 450 includes a gain 423 that describes an incremental amount of power input (or percentage or duty cycle) required to maintain an accelerating feedstock at the desired temperature 425. The gain 423 may be determined from the dynamics of the extruder 408, an environment of the extruder, and a material of the given feedstock being extruded. The gain 423, that is, $G_S$, relates a differential amount of power $\delta P$ to add for a given change in feedstock plunge rate over time 426, that is, $\frac{dv_z}{dt}$, that is a derivative 417 of the feedstock plunge rate 422 over time. For example:

$$\delta P = G_S \frac{dv_z}{dt} \qquad (2)$$

and

$$G_s \approx \rho C_p A \left(T_E - T_\infty\right), \qquad (3)$$

where $\rho$ is the material density of the given feedstock, $C_p$ is the material specific heat of the given feedstock, $A$ is the cross-sectional area of the given feedstock, $T_E$ is the temperature of the extruder, that is the sensed temperature $T_E$ 426 of FIG. 4, and $Ti_\infty$ is the ambient temperature of the chamber that houses the extruder 408, and $v_z$ is the feedstock plunge rate for the given feedback, as disclosed above. $T_E$ is a sensed temperature, that is, a measured temperature, of the extruder 408 that may be sensed by a thermocouple, or any other suitable temperature sensor.

The active control loop 450 applies proportional-integral-derivative (PID) gains to a difference 427 between the desired temperature 425 and the sensed temperature $T_E$ 426. The PID gains include a proportional gain 456, an integral gain 452, and a derivative gain 454, that may be combined by a first combiner 419 with each other to produce a PID result 427. The PID result 427 may combined by a second combiner 421 with the differential amount of power determined based on the gain 423 to produce the input power setting 442 to a heater of the extruder 408.

The given change in feedstock plunge rate over time 426, that is, $\dfrac{dv_z}{dt}$, determines the rate which should be applied in the active control loop 450 and the timing of which may be important. The value of $\dfrac{dv_z}{dt}$ used can be shifted by the controller 112 forward in time, for example:

$$\frac{d}{dt}\left(v_z\left(t = t_{current} + \tau\right)\right), \quad (4)$$

where the value $\tau$ is a free parameter determined by the system and $t_{current}$ is a present (physical) time of the system. The value of $\tau$ may be determined from a temporal response of the system and may depend on at least one of system size, system specific heat, system conductivity, system mass, or a combination thereof, or any other suitable system parameter.

Turning back to FIG. 1, the 3D printing system 102 may further comprise a PID controller (not shown) and a temperature sensor (not shown). For example, the controller 112 may be configured to implement PID control, such as the PID control 458 employed in the active control loop 450 of FIG. 4, disclosed above. The temperature sensor may be coupled to the extruder 106 and the PID controller and may be configured to sense an operating temperature of the extruder 106, such as the sensed (*i.e.,* operating) temperature $T_E$ 426 of FIG. 4, disclosed above. The PID controller may be configured to adjust the amount of heat transfer further based on the operating, that is, sensed temperature $T_E$ 426.

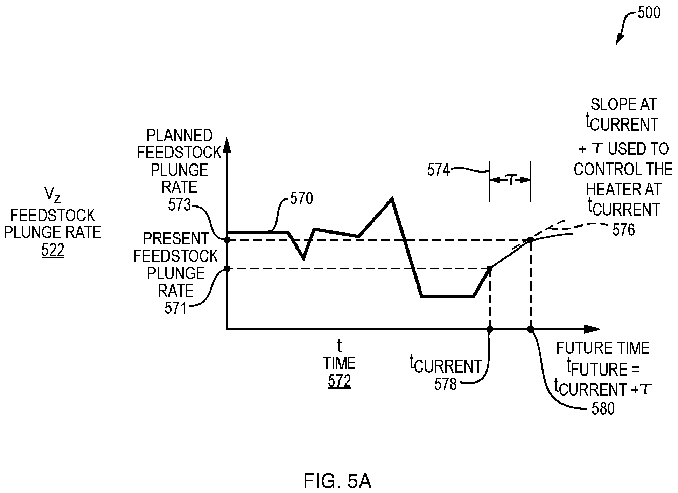

FIG. 5A is a graph 500 of an example embodiment of a plot 570 of feedstock plunge rate 522 over time 572. In the plot 570, the value of $\tau$ 574 may be determined from a temporal response of the system and may depend on at least one of the system size, system specific heat, system conductivity, and system mass, or a combination thereof. It should be understood that the term system refers to the extruder itself and may be defined, for example, by an internal geometry of the extruder through which the given feedstock traverses. A slope 576, $\dfrac{dv_z}{dt}$, at a present time $t_{current}$ 578 shifted by the value of $\tau$ 574 to future time 580 of $t = t_{current} + \tau$, such as disclosed in Eq. (4), above, may be used to control the heater, that is, the value of $\tau$ 574 may be used to configure the input power to the heater at the present time, that is, $t_{current}$ 578. The value of $\tau$ 574 may be referred to interchangeably herein as a phase shift or temporal phase shift.

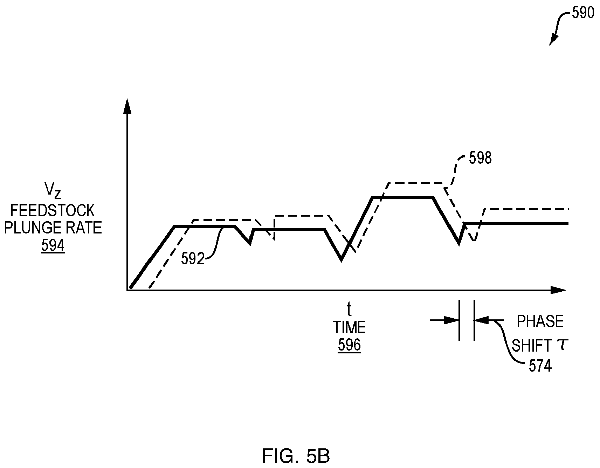

FIG. 5B is a graph 590 of another example embodiment of a plot 592 of feedstock plunge rate 594 over time 596. The graph 590 includes another plot 598 that shows a temporal response of an extruder. The temporal response includes the phase shift 574 that reflects a response time of heat transfer in the extruder and may be dependent on at least one of dimensions of the extruder, a specific heat of the extruder, a conductivity of the extruder, a mass of the extruder, or a combination thereof.

Turning back to FIG. 1, the 3D printing system 102 comprises the extruder 106 configured to extrude the given feedstock 108 from the extrusion location 110 and the controller 112 configured to maintain the desired temperature 125 for the given feedstock 108 at the extrusion location 110 by adjusting the amount of heat transfer to the given feedstock 108 via the extruder 106. The adjusting may be based on the planned feedstock plunge rate for the given feedstock 108, such as the planned feedstock plunge rate 353 of FIG. 3, disclosed above, and the desired temperature 125. The controller 112 may be configured to adjust the amount of the heat transfer at the time prior to enforcement of the planned feedstock plunge rate 353. The time may be based on a temporal response of heat transfer in the 3D printing system 102, such as the temporal response disclosed above with regard to FIG. 5B. The extruder 106 may be considered to be very conductive.

The time may be further based on a present time, such as the present time present time $t_{current}$ 578 of FIG. 5A, disclosed above, a present feedstock plunge rate 571 at the present time 578, a future time 580 at which the planned feedstock plunge rate 573 is to be enforced, and a rate of change between the present feedstock plunge rate 571 at the present time 578 and the planned feedstock plunge rate 573 at the future time 580, such as rate of change 426 $\frac{dv_z}{dt}$ of FIG. 4 or the slope 576, $\frac{dv_z}{dt}$, of FIG. 5A, disclosed above.

The input power setting such as the input power setting 342 of FIG. 3, input power setting 442 of FIG. 4, or input power setting of Eq. (1), disclosed above, may be a power value, percentage value, or duty cycle value. The controller 112 may be configured to control the input power setting based on the planned feedstock plunge rate, such as the planned feedstock plunge rate 353 of FIG. 3 or the planned feedstock plunge rate 573 of FIG. 5A, disclosed above, and a relationship between input power to the heating element and feedstock plunge rate, such as the relationship disclosed by the plot 340 of FIG. 3, disclosed above. The relationship may be specific to the desired temperature, an environmental condition of the extruder, properties of the extruder 106, and properties of the given feedstock 108. The environmental condition may include an ambient temperature, such as the ambient temperature 240 of FIG. 2, disclosed above, of a chamber (not shown) that houses the extruder 106 and a speed of a fan (not shown) of the 3D printing system 102.

The properties of the extruder 106 may include a first heat transfer coefficient, such as $\alpha$, disclosed above with regard to Eq. (1), that represents heat loss per temperature difference of the extruder, such as, and a second heat transfer coefficient, such as $\beta$, disclosed above with regard to Eq. (1), that represents heat loss of the extruder 106 that varies with the speed of the fan (not shown) of the 3D printing system 102. The properties of the given feedstock 108 may include density and specific heat of the given feedstock, and a cross-sectional area of the given feedstock in solid form, such as disclosed above with regard to Eq. (1). The properties of the given feedstock may include a thermal conductivity of the given feedstock. Values of such properties may vary as a function of temperature of the given feedstock.

The 3D printing system 102 may further comprise a heating element, such as the heater 124, that may be coupled to the extruder 106 via at least one heat block, such as the first heat block 107a and the second heat bock 107b. The heater 124 may heat the first heat block 107a and the second heat block 107b to transfer heat to a liquefying region 109 of the extruder 106. Enforcement of the planned feedstock plunge rate may cause an increase or decrease to the present feedstock plunge rate of the given feedstock 108. The controller 112 may be configured to adjust the amount of heat transfer by adjusting the input power setting to the heating element to maintain the desired temperature for the given feedstock 108 despite the increase or decrease to the present feedstock plunge rate. The extruder 106 may include a liquefying region 109 and the planned feedstock plunge rate may represent a planned speed for driving the given feedstock 108 into the liquefying region 109. The extruder 106 may be coupled to at least one heat sink, such as the first heat sink 136a and the second heat sink 136b that may be coupled to the extruder 106 to maintain the given feedstock 108 in a solid form 111 prior to entry into the liquefying region 109. At least one heat break, such as the first heat break 113a and the second heat break 113b, may be located between the first heat sink 136a and the second heat sink 136b and the first heat block 113a and the second heat block 113b, respectively.

The controller 112 may be further configured to receive a plurality of toolpath commands for printing the 3D object 104. The planned feedstock plunge rate may be based on one or more of the plurality of toolpath commands received.

In contrast to tracking a temperature of an extrudate and changing a power input value to a heater in response to a change in the tracked temperature, an example embodiment anticipates temperature change based on toolpath commands and, specifically, based on a change to feedstock plunge rate determined from the toolpath commands, and changes the power input value in advance of the change to the feedstock plunge rate, thus, obviating the change in the tracked temperature. While temperature may also be tracked, such tracked temperature information enables a secondary adjustment to the power input value whereas a primary adjustment to the power input value may be performed in response to a projected change to the feedstock plunge rate. In contrast to an input power value that is solely based on temperature, an example embodiment employs the input power value as a function of the feedstock plunge rate, properties of the feedstock, such as diameter and specific heat, disclosed above, a first temperature of a chamber that houses the extruder, a second temperature of the extruder, a speed of a fan employed for circulating air or cooling in the 3D printing system, etc. As such, an example embodiment may maintain a more consistent temperature for the given feedstock 108 relative to controlling input power for the heater based on sensed temperature alone, enabling a temperature of the given feedstock 108 to be maintained such that the given feedstock 108 remains in a melted or partially melted form. The given feedstock 108, in its melted or partially melted form, may be deposited from a nozzle 126 of the extruder 206 to form the 3D object 104.

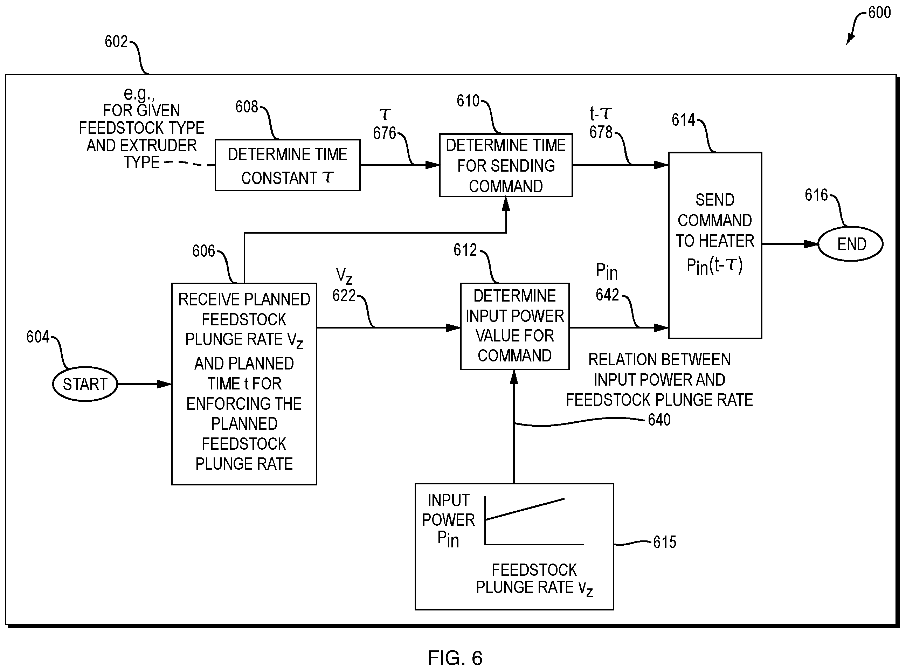

FIG. 6 is a flow diagram 600 of an example embodiment of a method for commanding input power to a heater in a 3D printing system (602) including an extruder for printing a 3D object. The method begins (604) and receives a planned feedstock plunge rate $v_z$ 622 for the given feedstock and a planned time $t$ 624 for enforcing the planned feedstock plunge rate $v_z$ 622 (606). The method determines a time constant $\tau$ 676 (also referred to interchangeably herein as a phase shift $\tau$) (608). The time constant $\tau$ 676 may represent a response time of heat transfer in the extruder and may be a measured response time that is a function of first properties of the extruder and second properties of the given feedstock. The method determines a time 678 for sending a command to adjust an input power value to a heater (610), the heater configured to heat the given feedstock, the time 678 determined being a value that is prior to the planned time $t$ 624 and being based on the time constant $\tau$ 676 for the extruder. The time 678 determined may be $t - \tau$. The method may determine an input power value 642 (612). The input power value 642 may be based on a relation 640 between input power and feedstock plunge rate, such as a plot 615 of a relationship between input power for heating a given feedstock and a feedstock plunge rate of the given feedstock, such as disclosed with regard to FIG. 3, above. The method may send a command to the heater (614) with the input power value 642 determined at the time 678 determined, that is, $t - \tau$, and the method thereafter ends (616) in the example embodiment.

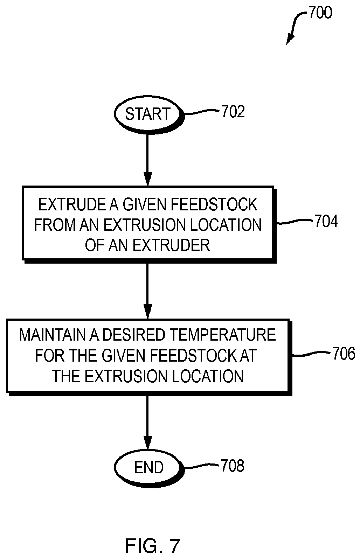

FIG. 7 is a flow diagram of an example embodiment of a method for printing a three-dimensional (3D) object in a 3D printing system (700). The method begins (702) and extrudes a given feedstock from an extrusion location of an extruder (704) and maintains a desired temperature for the given feedstock at the extrusion location by adjusting an amount of heat transfer to the given feedstock via the extruder based on a planned feedstock plunge rate for the given feedstock and the desired temperature, the amount being adjusted at a time prior to enforcement of the planned feedstock plunge rate, the time based on a temporal response of heat transfer in the 3D printing system (706), and the method thereafter ends (708) in the example embodiment.

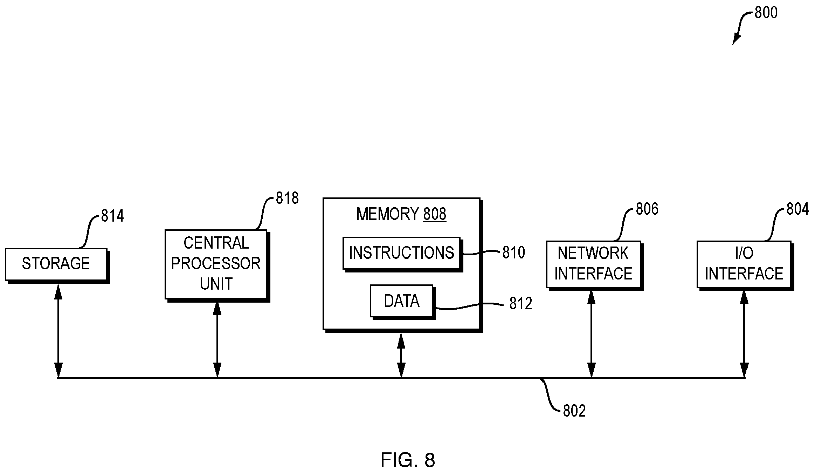

FIG. 8 is a block diagram of an example of the internal structure of a computer 800 in which various embodiments of the present disclosure may be implemented. The computer 800 contains a system bus 802, where a bus is a set of hardware lines used for data transfer among the components of a computer or processing system. The system bus 802 is essentially a shared conduit that connects different elements of a computer system (*e.g.,* processor, disk storage, memory, input/output ports, network ports, *etc.*) that enables the transfer of information between the elements. Coupled to the system bus 802 is an I/O device interface 804 for connecting various input and output devices (*e.g.,* keyboard, mouse, displays, printers, speakers, *etc.*) to the computer 800. A network interface 806 allows the computer 800 to connect to various other devices attached to a network. Memory 808 provides volatile storage for computer software instructions 810 and data 812 that may be used to implement embodiments of the present disclosure. Disk storage 814 provides non-volatile storage for computer software instructions 810 and data 812 that may be used to implement embodiments of the present disclosure. A central processor unit 818 is also coupled to the system bus 802 and provides for the execution of computer instructions.

Further example embodiments disclosed herein may be configured using a computer program product; for example, controls may be programmed in software for implementing example embodiments. Further example embodiments may include a non-transitory computer-readable medium containing instructions that may be executed by a processor, and, when loaded and executed, cause the processor to complete methods described herein. It should be understood that elements of the block and flow diagrams may be implemented in software or hardware, such as via one or more arrangements of circuitry of FIG. 8, disclosed above, or equivalents thereof, firmware, a combination thereof, or other similar implementation determined in the future. For example, the controller 112 of FIG. 1, disclosed above, may be implemented in software or hardware, such as via one or more arrangements of circuitry of FIG. 8, disclosed above, or equivalents thereof, firmware, a combination thereof, or other similar implementation determined in the future. In addition, the elements of the block and flow diagrams described herein may be combined or divided in any manner in software, hardware, or firmware. If implemented in software, the software may be written in any language that can support the example embodiments disclosed herein. The software may be stored in any form of computer readable medium, such as random access memory (RAM), read only memory (ROM), compact disk read-only memory (CD-ROM), and so forth. In operation, a general purpose or application-specific processor or processing core loads and executes software in a manner well understood in the art. It should be understood further that the block and flow diagrams may include more or fewer elements, be arranged or oriented differently, or be represented differently. It should be understood that implementation may dictate the block, flow, and/or network diagrams and the number of block and flow diagrams illustrating the execution of embodiments disclosed herein.

While example embodiments have been particularly shown and described, it will be understood by those skilled in the art that various changes in form and details may be made therein without departing from the scope of the embodiments encompassed by the appended claims.

**Claims**

**1.** A three-dimensional (3D) printing system (102) for printing a 3D object, the 3D printing system comprising:

an extruder (106; 206) configured to extrude a given feedstock (108; 208) from an extrusion location; and a controller (112) configured to maintain a desired temperature for the given feedstock at the extrusion location by adjusting an amount of heat transfer to the given feedstock via the extruder based on a planned feedstock plunge rate for the given feedstock and the desired temperature, the controller configured to adjust the amount of the heat transfer at a time prior to enforcement of the planned feedstock plunge rate, the time based on a temporal response of heat transfer in the 3D printing system.

2. The 3D printing system of claim 1, further comprising a proportional-integral-derivative (PID) controller and a temperature sensor, the temperature sensor coupled to the extruder and the PID controller and be configured to sense an operating temperature of the extruder, the PID controller configured adjust the amount of heat transfer further based on the operating temperature.

3. The 3D printing system of claim 1, and any one of:

   a) wherein the temporal response is dependent on dimensions of the extruder, a specific heat of the extruder, a conductivity of the extruder, a mass of the extruder, or a combination thereof; or
   b) wherein the time is further based on a present time, a present feedstock plunge rate at the present time, a future time at which the planned feedstock plunge rate is to be enforced, and a rate of change between the present feedstock plunge rate at the present time and the planned feedstock plunge rate at the future time; or
   c) wherein the extruder includes a liquefying region, and the planned feedstock plunge rate represents a planned speed for driving the given feedstock into the liquefying region; or
   d) wherein the desired temperature is a lowest temperature at which the given feedstock begins to flow in response to an applied force or displacement; or
   e) wherein the controller (112) is further configured to receive a plurality of toolpath commands for printing a 3D object and wherein the planned feedstock plunge rate is based on one or more of the plurality of toolpath commands received.

4. The 3D printing system of claim 1, further comprising a heating element (107; 207) coupled to the extruder and wherein the controller is configured to adjust an input power setting to the heating element to adjust the amount of heat transfer.

5. The 3D printing system of claim 4, wherein the input power setting is a power value, percentage value, or duty cycle value.

6. The 3D printing system of claim 4, wherein the controller (112) is configured to control the input power setting based on the planned feedstock plunge rate and a relationship between input power to the heating element and feedstock plunge rate, the relationship specific to the desired temperature, an environmental condition of the extruder, properties of the extruder, and properties of the given feedstock.

7. The 3D printing system of claim 6, and any one of:

   a) wherein the environmental condition includes an ambient temperature of a chamber that houses the extruder and a speed of a fan of the 3D printing system; or
   b) wherein properties of the extruder (106; 206) include a first heat transfer coefficient representing heat loss per temperature difference of the extruder and a second heat transfer coefficient representing heat loss of the extruder that varies with a speed of a fan of the 3D printing system; or
   c) wherein properties of the given feedstock (108; 208) include density of the given feedstock, specific heat of the given feedstock, a thermal conductivity of the given feedstock, a cross-sectional area of the given feedstock in solid form, or a combination thereof.

8. The 3D printing system of claim 1, further comprising a heating element (107; 207) coupled to the extruder, wherein enforcement of the planned feedstock plunge rate causes an increase or decrease to a present feedstock plunge rate of the given feedstock and the controller is configured to adjust the amount of heat transfer by adjusting an input power setting to the heating element to maintain the desired temperature for the given feedstock despite the increase or decrease to the present feedstock plunge rate.

9. A method for printing a three-dimensional (3D) object in a 3D printing system, the method comprising:

extruding a given feedstock from an extrusion location of an extruder (106; 206); and

maintaining a desired temperature for the given feedstock at the extrusion location by adjusting an amount of heat transfer to the given feedstock (108; 208) via the extruder based on a planned feedstock plunge rate for the given feedstock and the desired temperature, the amount being adjusted at a time prior to enforcement of the planned feedstock plunge rate, the time based on a temporal response of heat transfer in the 3D printing system.

10. The method of claim 9, further comprising sensing an operating temperature of the extruder (106; 206) and further adjusting the amount of heat transfer based on the operating temperature.

11. The method of claim 9 and any one of:

a) wherein the temporal response is dependent on dimensions of the extruder, a specific heat of the extruder, a conductivity of the extruder, a mass of the extruder, or a combination thereof; or

b) wherein the time is further based on a present time, a present feedstock plunge rate at the present time, a future time at which the planned feedstock plunge rate is to be enforced, and a rate of change between the present feedstock plunge rate at the present time and the planned feedstock plunge rate at the future time; or

c) wherein the extruder includes a liquefying region, and the planned feedstock plunge rate represents a planned speed for driving the given feedstock into the liquefying region; or

d) wherein the desired temperature is a lowest temperature at which the given feedstock begins to flow in response to an applied force or displacement; or

e) further comprising receiving a plurality of toolpath commands for printing the 3D object and determining the planned feedstock plunge rate based on one or more of the plurality of toolpath commands received.

12. The method of claim 9, wherein adjusting the amount of heat transfer includes adjusting an input power setting to a heating element (107; 207) coupled to the extruder.

13. The method of claim 12 and any one of:

a) wherein the input power setting is a power value, percentage value, or duty cycle value; or

b) further including controlling the input power setting based on the planned feedstock plunge rate and a relationship between input power to the heating element and feedstock plunge rate, the relationship specific to the desired temperature, an environmental condition of the extruder, properties of the extruder, and properties of the given feedstock, in which case optionally any one of:

i) wherein the environmental condition includes an ambient temperature of a chamber that houses the extruder (106; 206) and a speed of a fan of the 3D printing system; or

ii) wherein properties of the extruder (106; 206) include a first heat transfer coefficient representing heat loss per temperature difference of the extruder and a second heat transfer coefficient representing heat loss of the extruder that varies with a speed of a fan of the 3D printing system; or

iii) wherein properties of the given feedstock include density of the given feedstock, specific heat of the given feedstock, a thermal conductivity of the given feedstock, a cross-sectional area of the given feedstock in solid form, or a combination thereof.

14. The method of claim 9, further comprising enforcing the planned feedstock plunge rate causing an increase or decrease to a present feedstock plunge rate of the given feedstock and wherein adjusting the amount of heat transfer includes adjusting an input power setting to a heating element coupled to the extruder (106; 206) to maintain the desired temperature for the given feedstock despite the increase or decrease to the present feedstock plunge rate.

15. A non-transitory computer-readable medium for controlling a three-dimensional (3D) printing system, the non-transitory computer-readable medium having encoded thereon a sequence of instructions which, when loaded and executed by a processor, causes the 3D printing system to:

control extrusion of a given feedstock from an extrusion location of an extruder (106; 206); and

maintain a desired temperature for the given feedstock at the extrusion location by adjusting an amount of heat transfer to the given feedstock (108; 208) via the extruder based on a planned feedstock plunge rate for the given feedstock and the desired temperature, the amount being adjusted at a time prior to enforcement of the planned feedstock plunge rate, the time based on a temporal response of heat transfer in the 3D printing system.

FIG. 1

EP 3 459 710 A1

FIG. 2

FIG. 3

FIG. 4

FIG. 5A

FIG. 5B

EP 3 459 710 A1

FIG. 6

FIG. 7

FIG. 8

Europäisches
Patentamt

European
Patent Office

Office européen
des brevets

## EUROPEAN SEARCH REPORT

Application Number

EP 18 19 5820

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Jevonavis: "Robust Extruder Temperature Control", , 21 March 2015 (2015-03-21), XP002788565, Retrieved from the Internet: URL:https://jevonblog.wordpress.com/2015/03/21/robust-extruder-temperature-control/ [retrieved on 2019-01-28] * page 7, paragraph 1 * ----- | 1-15 | INV. B29C64/118 B29C64/393 B29C64/295 B29C64/209 B33Y30/00 B33Y50/02 B33Y10/00 |
| A | US 2017/173879 A1 (MYERBERG JONAH SAMUEL [US] ET AL) 22 June 2017 (2017-06-22) * paragraphs [0128], [0196] * ----- | 1-15 | |

TECHNICAL FIELDS
SEARCHED      (IPC)

B29C
B33Y

The present search report has been drawn up for all claims

| Place of search | Date of completion of the search | Examiner |
|---|---|---|
| The Hague | 4 February 2019 | Van Wallene, Allard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 19 5820

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2019

| Patent document cited in search report | Publication date | Patent family member(s) | Publication date |
|---|---|---|---|
| US 2017173879 A1 | 22-06-2017 | US 2017173692 A1<br>US 2017173693 A1<br>US 2017173694 A1<br>US 2017173695 A1<br>US 2017173697 A1<br>US 2017173877 A1<br>US 2017173878 A1<br>US 2017173879 A1<br>US 2017182560 A1 | 22-06-2017<br>22-06-2017<br>22-06-2017<br>22-06-2017<br>22-06-2017<br>22-06-2017<br>22-06-2017<br>22-06-2017<br>29-06-2017 |

EPO FORM P0459

For more details about this annex : see Official Journal of the European Patent Office, No. 12/82